# EUROPÄISCHE PATENTSCHRIFT

(11) **EP 1 931 950 B1**
(45) Veröffentlichungstag und Bekanntmachung des Hinweises auf die Patenterteilung: **19.09.2012**
(21) Anmeldenummer: 06793958.7
(22) Anmeldetag: 03.10.2006
(51) Int. Cl.: G01F 13/00, G01G 11/08, B65B 1/10, B65B 1/32

(54) **DOSIEREINRICHTUNG FÜR PULVER- ODER PASTENFÖRMIGE SUBSTANZEN**
DOSING DEVICE FOR POWERDY OR PASTY SUBSTANCES
DISPOSITIF DE DOSAGE POUR SUBSTANCES PULVERULENTES OU PATEUSES

(30) Priorität: 03.10.2005 EP 05109150; 03.10.2005 EP 05109151
(43) Veröffentlichungstag der Anmeldung: 18.06.2008
(73) Patentinhaber: Mettler-Toledo AG, 8606 Greifensee (CH)
(72) Erfinder: LÜCHINGER, Paul, CH-8610 Uster (CH)
(86) Internationale Anmeldenummer: PCT/EP2006/067008
(87) Internationale Veröffentlichungsnummer: WO 2007/039612

(56) Entgegenhaltungen:
- EP-A- 0 654 422
- DE-A1- 19 841 478
- FR-A- 2 607 794
- GB-A- 701 572
- US-A- 2 084 029
- PATENT ABSTRACTS OF JAPAN Bd. 009, Nr. 177 (P-375), 23. Juli 1985 (1985-07-23) -& JP 60 052724 A (NIPPON KOKAN KK), 26. März 1985 (1985-03-26)

## Beschreibung

Die Erfindung betrifft eine Dosiereinrichtung für pulver- oder pastenförmige Substanzen, welche einen mit einem Quell- oder Entnahmegefäss verbindbaren oder mit diesem verbundenen Dosierkopf aufweist.

Solche Dosiereinrichtungen finden insbesondere beim Dosieren kleiner Mengen, beispielsweise toxischer Substanzen, mit hoher Präzision in kleine Zielgefässe Verwendung. Häufig sind solche Zielgefässe auf einer Waage platziert, um die Menge der aus der Dosiereinrichtung ausgetragenen Substanz zu verwiegen, so dass sie anschliessend bestimmungsgemäss weiter verarbeitet werden kann.

Die zu dosierende Substanz befindet sich beispielsweise in einem Entnahmegefäss, welches mit dem Dosierkopf in Verbindung steht und für das Dosieren mit diesem eine Einheit - die Dosiereinrichtung - bildet. Dabei ist es wünschenswert, die zu dosierende Substanz durch eine kleine Öffnung der Dosiereinrichtung auszutragen, so dass sie auch gezielt in ein Gefäss mit einem kleinen Öffnungsquerschnitt abgefüllt werden kann.

Dosiereinrichtungen für trockenes und/oder pulverförmiges Schüttgut, beispielsweise Farbstoffpulver sind bekannt und im Einsatz. So wird in der US 5 145 009 A eine Vorrichtung zum Dosieren beschrieben, die aus einem Ausgabebehälter mit einem verschliessbaren Auslass an seiner Unterseite besteht. Als Verschluss dient ein kegelförmiger, sich nach oben verjüngender zum Öffnen einer Austrittöffnung vertikal nach unten verstellbarer Ventilkörper, der in seiner Offenstellung rotiert und Mittel zum Fördern des Gutes in Richtung der Auslassöffnung besitzt.

Die beschriebene Einrichtung eignet sich weniger gut für das Dosieren von Schüttgut in Gefässe mit einem kleinen Öffnungsquerschnitt. Die sich nach oben verjüngende Struktur des Ventilkörpers sowie dessen Rotation ergeben eine Radial- bzw. Horizontalkomponente der Schüttgutpartikel am Auslass und verursachen demzufolge eine Streuung, die selbst über einen relativ breiten Öffnungsquerschnitt eines abzufüllenden Gefässes hinausreichen kann.

Ein Verfahren und eine Vorrichtung zum Austragen einer pulver- oder pastenförmigen Kleinstmengenprobe, beispielsweise für die Atomabsorptionsspektroskopie, offenbart die US 4 905 525 A. In einem Vorratsbehälter mit einer Auslassöffnung am Ende eines Formkanals ragt von oben her ein Stempel in das im Behälter befindliche Probenmaterial. Eine kleine Probenmenge wird durch den Formkanal gepresst und aus der Auslassöffnung ausgetragen, indem der Stempel in das Probenmaterial gedrückt wird, so dass es sich oberhalb des Formkanals verdichtet. In einer speziellen Ausführungsform ist der Behälter zur Auslassöffnung hin trichterförmig ausgebildet und der Stempel ist schräg zur Auslassöffnung angeordnet.

In der DE 198 41 478 A1 ist eine Dosiereinrichtung zum Abfüllen von viskosen, pastösen, pulverförmigen oder granulatförmigen Produkten beschrieben, mit einem Dosierbehälter, der in der für den Betrieb positionierten Dosiereinrichtung sich zu seinem unteren Ende hin verjüngt und eine dort angeordnete Austrittsöffnung aufweist. An einer zentral angeordneten rotierbar ausgestalteten Hohlwelle sind Abstreifwerkzeuge befestigt. Die Dosiereinrichtung verfügt über ein Dosierventil, das eine in der Hohlwelle angeordnete und translatorisch auf und ab bewegbare Ventilstange aufweist, an deren unterem Ende ein kegelförmig sich nach oben verjüngender Ventilkopf angeordnet ist, so dass die Austrittsmenge des Abfüllguts geregelt und die Austrittsöffnung von oben her geschlossen werden kann. In einigen der beschriebenen Ausführungsformen ist auch das Dosierventil rotierbar ausgebildet.

Bei einer Dosiereinrichtung gemäss der DE 198 41 478 A1 oder gemäss der US 5 145 009 A kann die aus dem Behälter auszutragende Menge nicht beliebig klein gehalten werden. Da die Austrittsöffnung ringförmig ist, ist die minimal zum Dosieren verwendbare Breite des Ringspaltes auf mindestens die Ausdehnung einer kleinsten Schüttguteinheit - beispielsweise eines Pulverkorns - begrenzt, wodurch gleichzeitig mehrere Schüttguteinheiten aus dem Ringspalt austreten können. Ferner besteht die Gefahr, dass je nach Beschaffenheit des Schüttgutes ein Teil des Spalts verstopft werden kann. Dies kann insbesondere dann erfolgen, wenn gegen Ende des Dosiervorgangs durch Reduktion der Breite des Ringspalts die Austragungsrate reduziert werden soll, da dabei dessen Breite im Verhältnis zu dessen Länge beziehungsweise Umfang stetig ungünstiger wird.

Aufgabe der Erfindung ist es, eine Dosiereinrichtung zur Verfügung zu stellen, mit welcher Kleinstmengen von pulver- oder pastenförmigen Substanzen gezielt in ein Gefäss eingefüllt werden können.

Diese Aufgabe wird gelöst durch die Merkmale des unabhängigen Anspruchs 1.

Eine Dosiereinrichtung für pulver- oder pastenförmige Substanzen ist mit einem Entnahmegefäss und einem damit verbundenen oder verbindbaren Dosierkopf versehen, der ein Gehäuse aufweist, welches eine mit kreisförmigem Querschnitt versehene Austrittsöffnung besitzt. Ferner weist der Dosierkopf ein Austragungs- und Verschlusselement auf, wobei die Austrittsöffnung und das Austragungs- und Verschlusselement auf der Mittellängsachse des Dosierkopfs angeordnet sind, und das Austragungs- und Verschlusselement relativ zum Gehäuse um die Mittellängsachse rotierbar und entlang der Mittellängsachse bezüglich der Austrittsöffnung translatorisch verschiebbar ausgestaltet ist. Das Austragungs- und Verschlusselement ist in seiner Grundform zylinderförmig ausgebildet und weist einen dem Verschliessen der Austrittsöffnung dienenden Verschlussbereich und einen diesem benachbart angeordneten, der Austragung von zu dosierender Substanz dienenden Austragungsbereich mit mindestens einer vom Zylindermantel ausgehenden Vertiefung auf.

Der Austragungsbereich des Austragungs- und Verschlusselements weist demnach eine Form auf, die für ein sich mit seinem Austragungsbereich in der Austrittsöffnung befindlichen Austragungs- und Verschlusselement mindestens eine aussermittig angeordnete und nicht konzentrisch ausgebildete wirksame Austrittsöffnung, das heisst eine Durchtrittsöffnung, freilässt. Durch eine translatorische Verschiebung des Austragungs- und Verschlusselements entlang der Mittellängsachse der Dosiereinrichtung kann die Durchtrittsöffnung, das heisst ein Bereich der Austrittsöffnung, durch welchen im Dosierbetrieb die auszutragende Substanz aus der Dosiereinrichtung gelangt, kontinuierlich in definierter Weise vergrössert beziehungsweise verkleinert werden. Ausserdem wird ihre Orientierung bezüglich der Mittellängsachse durch Rotation ständig verändert.

Diese variable wirksame Austrittsöffnung oder Durchtrittsöffnung ermöglicht ein Austragen grösserer oder kleiner Substanzmengen je nach Bedarf. Insbesondere können kleinste Substanzmengen, beispielsweise Pulver im Mikrogrammbereich, ausgetragen werden. Während eines Dosiervorgangs kann somit zunächst bei relativ grosser Durchtrittsöffnung eine grosse Substanzmenge ausgetragen werden und bei Annäherung an eine vorgegebene Zielmenge durch die Translationsbewegung des Austragungs- und Verschlusselements die Durchtrittsöffnung derart verkleinert werden, dass nurmehr noch wenig Substanz ausgetragen wird und das Erreichen der Zielmenge äusserst genau erfolgen kann. Die Durchtrittsöffnung weist somit, sofern die Austrittsöffnung nicht vollständig verschlossen ist, immer einen definierten Querschnitt auf, optimiert auf die zu dosierende Substanz.

Die mindestens eine Vertiefung im Austragungsbereich des Austragungs- und Verschlusselements kann eine stetige Oberfläche oder eine unstetige Oberfläche aufweisen. Im letzteren Fall wird die Vertiefung durch eine Kerbe gebildet. Die Oberfläche der Vertiefung bildet somit eine Austragungsfläche. Dabei kann die Austragungsfläche in einer oder in zwei Richtungen konkav gekrümmt ausgeformt sein.

In einer besonderen Ausführungsform ist die Austragungsfläche um die Mittellängsachse verwunden ausgestaltet.

Insbesondere variiert die Breite und die Tiefe der jeweiligen Vertiefung derart, dass sie zum Verschlussbereich hin kleiner wird.

Im Übrigen wird durch die Rotation des Austragungs- und Verschlusselements auch der Fluss der auszutragenden Substanz erzeugt und aufrechterhalten. Mit den verschiedenen Ausgestaltungsmöglichkeiten einer Vertiefung, insbesondere hinsichtlich deren Austragungsfläche am Austragungs- und Verschlusselement, kann unter anderem der Fluss der auszutragenden Substanz gesteuert werden. Die Durchtrittsöffnung, insbesondere ihr Öffnungsquerschnitt kann somit auf die Gegebenheit des zu dosierenden Materials optimiert werden.

In der Geschlossenstellung des Austragungs- und Verschlusselements schliesst der Verschlussbereich an dessen in der Betriebsstellung unterem Ende bündig mit dem Gehäuse ab. In einer besonders vorteilhaften Ausführungsform weist der Verschlussbereich eines Austragungs- und Verschlusselements an seiner Stirnfläche eine von einem als Tropfkante wirkenden Rand umschlossene Vertiefung auf.

Der Austragungsbereich des Austragungs- und Verschlusselements der Dosiereinrichtung weist demnach eine Form auf, die für ein sich mit seinem Austragungsbereich in der Austrittsöffnung befindliches Austragungs- und Verschlusselement mindestens eine aussermittig angeordnete und nicht konzentrisch ausgebildete Durchtrittsöffnung freilässt.

Die Dosiereinrichtung umfasst in einer besonders bevorzugten Weiterbildung ein Zufuhrwerkzeug, welches ebenfalls um die Mittellängsachse rotierbar ausgestaltet ist und zu dosierende Substanz der Austrittsöffnung zuführt, sowie die an der die Austrittsöffnung umgebenden Kante des Gehäuses, im Folgenden als der Rand der Austrittsöffnung bezeichnet, haftende Substanz von dieser löst. Somit verbleibt beim Dosieren keine Substanz in der Austrittsöffnung, welche sich eventuell beim vollständigen Verschliessen derselben nach Beendigung des Dosiervorgangs verklemmen würde und damit das vollständige Verschliessen verunmöglichen könnte. Auch ist es mit dem Zufuhrwerkzeug möglich, stark koagulierende Pulver sowie Pulver mit geladenen Partikeln oder Pasten zu dosieren, indem es diese Substanzen auflockert, der Austrittsöffnung zuführt und vom Rand der Austrittsöffnung abstreift.

Das Zufuhrwerkzeug kann mittels Federkraft gegen den Rand der Austrittsöffnung gedrückt werden. In bevorzugter Ausfertigung weist es einen Rührteil und ein Zufuhrelement auf, wobei dieses Zufuhrelement in vorteilhafter Ausgestaltung einen flächigen Bereich umfasst und im Betrieb stets lose mit dem Rand der Austrittsöffnung in Kontakt ist. In spezifischer Ausgestaltung besitzt das Zufuhrelement eine Spitze, die im Betrieb den Rand der Austrittsöffnung kontaktiert.

Die Position des Zufuhrelements im Zufuhrwerkzeug weist bevorzugt einen spitzen Anstellwinkel in tangentialer Richtung bezüglich der Ebene seiner Kreisbahn bei Rotation um die Mittellängsachse auf und/oder das Zufuhrelement ist unter einem spitzen Winkel gegenüber der Mittellängsachse geneigt.

In einer spezifischen Ausführungsform ist das Austragungs- und Verschlusselement mit einer entlang der Mittellängsachse angeordneten Stange, welche das Entnahmegefäss als Antriebswelle durchdringt, verbunden, wobei das Zufuhrwerkzeug relativ zur Stange und dem Austragungs- und Verschlusselement translatorisch entlang der Mittellängsachse verschiebbar gelagert ist.

In einer besonders bevorzugten Weiterbildung weist der Dosierkopf der Dosiereinrichtung und/oder die Dosiereinrichtung selbst ein Gehäuse auf, welches sich in Richtung zur Austrittsöffnung hin verjüngt

Die Dosiereinrichtung wird anhand von Beispielen, wie sie schematisch in den Zeichnungen dargestellt sind, im Folgenden beschrieben. Es zeigen:
- Figur 1: eine Dosiereinrichtung mit einem auf ein Entnahmegefäss aufgeschraubten Dosierkopf in dreidimensionaler Darstellung;
- Figur 2a: einen Dosierkopf mit einer ersten Ausführungsform des Austragungs- und Verschlusselements in der Offenstellung in dreidimensionaler Darstellung, wobei dessen Gehäuse der Länge nach aufgeschnitten ist;
- Figur 2b: einen Dosierkopf mit einer ersten Ausführungsform des Austragungs- und Verschlusselements in der Geschlossenstellung in dreidimensionaler Darstellung, wobei dessen Gehäuse der Länge nach aufgeschnitten ist;
- Figur 3: den Dosierkopf aus Figur 2b, wobei ein Zufuhrwerkzeug vorhanden ist;
- Figur 4a: einen Schnitt durch den Dosierkopf aus Figur 3 mit dem Austragungs- und Verschlusselements in der Offenstellung;
- Figur 4b: einen Schnitt durch den Dosierkopf aus Figur 3, wobei das Austragungs- und Verschlusselements in der Geschlossenstellung gezeigt ist;
- Figur 5: das in den vorangehenden Figuren gezeigte Austragungs- und Verschlusselement in einer Schnittzeichnung,
- Figur 6a: einen Dosierkopf mit einer zweiten Ausführungsform des Austragungs- und Verschlusselements in der Geschlossenstellung und mit einer zweiten Ausführungsform des Zufuhrwerkzeugs in dreidimensionaler Darstellung, wobei das Gehäuse der Länge nach aufgeschnitten ist;
- Figur 6b: eine Seitenansicht des Dosierkopfs aus Figur 6a, wobei dessen Gehäuse der Länge nach aufgeschnitten ist;
- Figur 6c: den Dosierkopf aus Figur 6a mit dem Austragungs- und Verschlusselement in der Offenstellung;
- Figur 6d: den Dosierkopf aus Figur 6b mit dem Austragungs- und Verschlusselement in der Offenstellung;
- Figur 7a: einen Dosierkopf mit einer dritten Ausführungsform des Austragungs- und Verschlusselements in der Geschlossenstellung und der Ausführungsform des Zufuhrwerkzeugs aus Figur 6a in dreidimensionaler Darstellung, wobei das Gehäuse der Länge nach aufgeschnitten ist;
- Figur 7b: eine Seitenansicht des Dosierkopfs aus Figur 7a, wobei dessen Gehäuse der Länge nach aufgeschnitten ist;
- Figur 8a: einen Dosierkopf mit einer vierten Ausführungsform des Austragungs- und Verschlusselements in der Geschlossenstellung und mit einer dritten Ausführungsform des Zufuhrwerkzeugs in dreidimensionaler Darstellung, wobei das Gehäuse der Länge nach aufgeschnitten ist;
- Figur 8b: eine Seitenansicht des Dosierkopfs aus Figur 8a, wobei dessen Gehäuse der Länge nach aufgeschnitten ist;
- Figur 9a: eine stark schematisierte Sicht von oben in einen Dosierkopf, wobei das zweite Austragungs- und Verschlusselement im Bereich der Austrittsöffnung 7 geschnitten gezeigt ist;
- Figur 9b: eine stark schematisierte Sicht von oben in einen Dosierkopf, wobei das dritte Austragungs- und Verschlusselement im Bereich der Austrittsöffnung geschnitten gezeigt ist;
- Figur 10a: das Austragungs- und Verschlusselement aus den Figuren 6a bis 6d seitlich mit Blick auf die Austragungsfläche;
- Figur 10b: das Austragungs- und Verschlusselement aus Figur 10a, gegenüber der dortigen Darstellung um 90° gedreht;
- Figur 10c: das Austragungs- und Verschlusselement aus Figur 10a in einer dreidimensionalen Darstellung;
- Figur 10d: das Austragungs- und Verschlusselement aus Figur 10a in einer dreidimensionalen Darstellung;
- Figur 10e: eine stark vergrösserte Schnittdarstellung durch ein Austragungs- und Verschlusselement gemäss den Figuren 10a bis 10d im Bereich der Austrittsöffnung;
- Figur 11a: die dritte Ausgestaltung des Austragungs- und Verschlusselements, wie sie in den Figuren 7a und 7b gezeigt ist, seitlich mit Blick auf die Austragungsfläche;

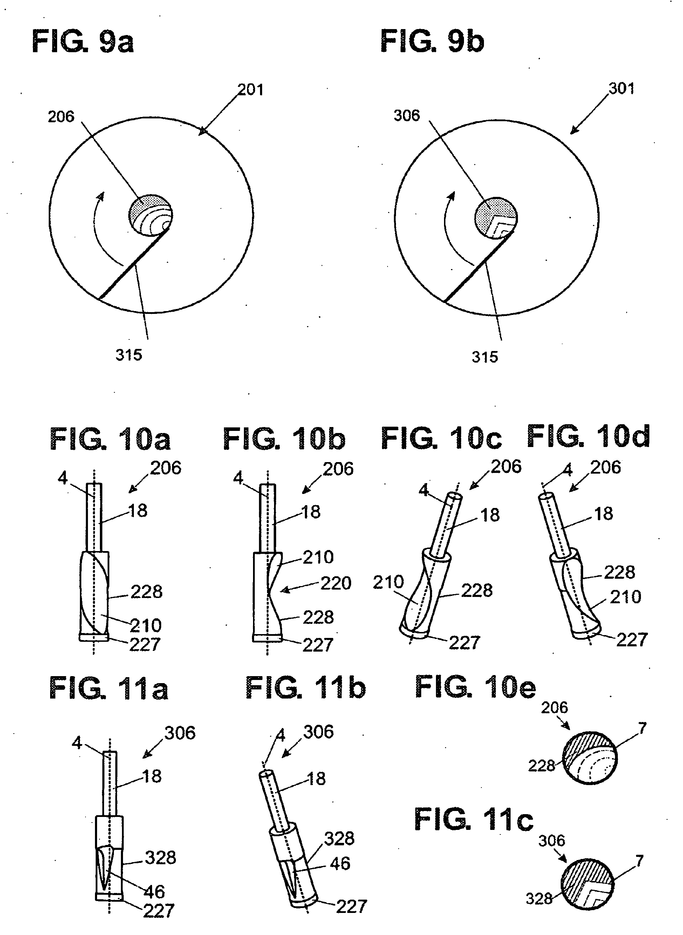

- Figur 11 b: die dritte Ausgestaltung des Austragungs- und Verschlusselements gegenüber der Darstellung von Figur 11 a um 90° gedreht;
- Figur 11 c: eine stark vergrösserte Schnittdarstellung durch ein Austragungs- und Verschlusselement gemäss den Figuren 11 a und 11 b im Bereich der Austrittsöffnung;

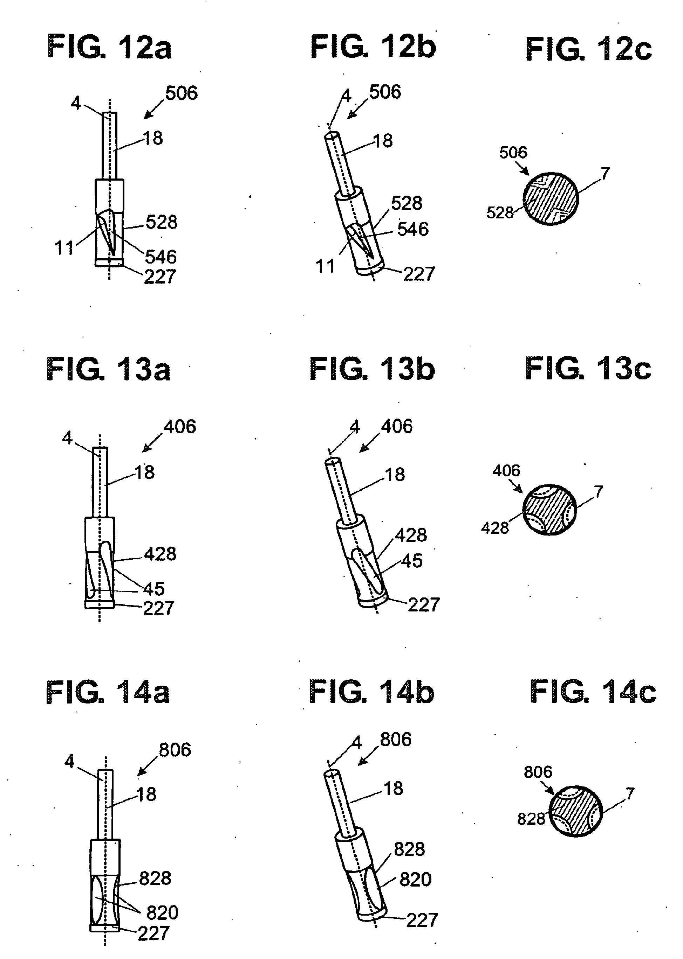

- Figur 12a: eine fünfte Ausgestaltung des Austragungs- und Verschlusselements in seitlicher Ansicht;
- Figur 12b: eine fünfte Ausgestaltung des Austragungs- und Verschlusselements in dreidimensionaler Darstellung;
- Figur 12c: eine stark vergrösserte Schnittdarstellung durch ein Austragungs- und Verschlusselement gemäss den Figuren 12a und 12b im Bereich der Austrittsöffnung.

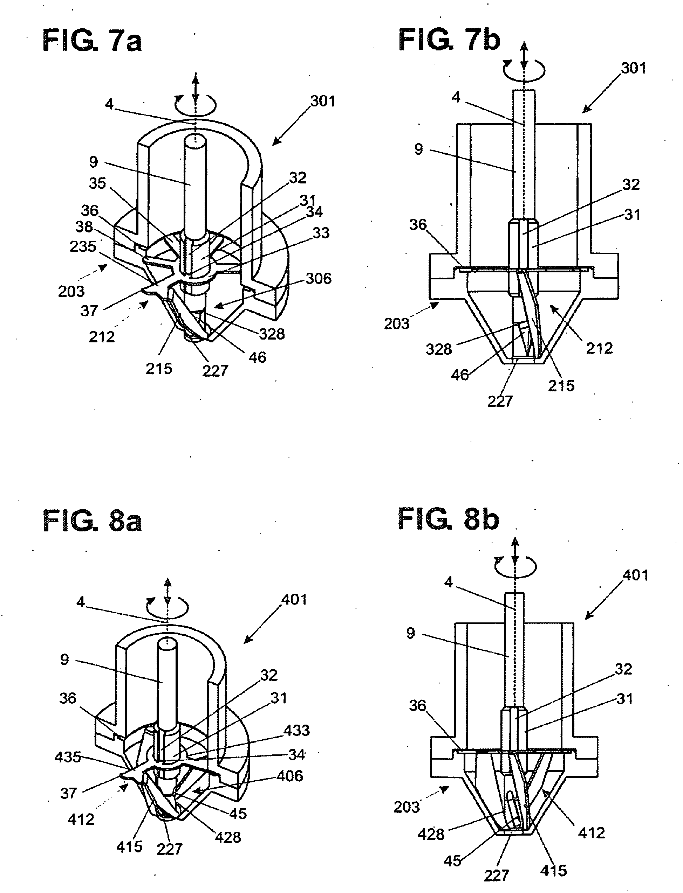

- Figur 13a: die vierte Ausgestaltung des Austragungs- und Verschlusselements, wie sie in den Figuren 8a und 8b gezeigt ist, seitlich mit Blick auf die Austragungsfläche,
- Figur 13b: die vierte Ausgestaltung des Austragungs- und Verschlusselements in einer dreidimensionalen Darstellung;
- Figur13c: die vierte Ausgestaltung des Austragungs- und Verschlusselements in einer Schnittdarstellung in einer orthogonal zur Mittellängsachse ausgerichteten Ebene im Bereich der Austrittsöffnung.
- Figur 14a: eine sechste Ausgestaltung des Austragungs- und Verschlusselements, seitlich mit Blick auf die Austragungsfläche;
- Figur 14b: die sechste Ausgestaltung des Austragungs- und Verschlusselements in einer dreidimensionalen Darstellung;
- Figur14c: die sechste Ausgestaltung des Austragungs- und Verschlusselements in einer Schnittdarstellung in einer orthogonal zur Mittellängsachse ausgerichteten Ebene im Bereich der Austrittsöffnung.

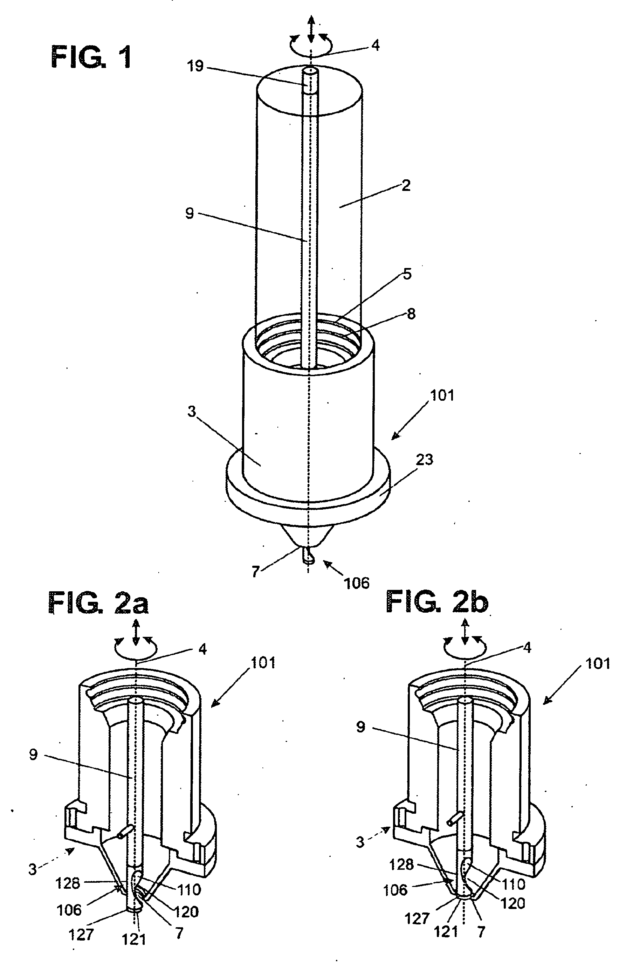

Figur 1 zeigt eine Dosiereinrichtung für pulver- oder pastenförmige Substanzen, welche einen Dosierkopf 101 und ein Entnahmegefäss 2 umfasst. Die Dosiereinrichtung ist im Wesentlichen axialsymmetrisch ausgestaltet und ist in ihrer Betriebsstellung, beispielsweise wenn dosiert werden soll, beziehungsweise im betriebsbereiten Zustand, mit ihrer Mittellängsachse 4 in vertikaler Richtung ausgerichtet. Der ein Gehäuse 3 aufweisende Dosierkopf 101 befindet sich in der Figur 1 unterhalb des Entnahmegefässes 2. Er ist auf das Entnahmegefäss 2 aufgesetzt und wurde vor dem Befüllen des Entnahmegefässes mittels eines Innengewindes 5 des Dosierkopfs 101 und eines Aussengewindes 8 des Entnahmegefässes 2 auf dieses aufgeschraubt. Der Dosierkopf kann prinzipiell in jeder aus dem Stand der Technik bekannten Weise trennbar mit dem Entnahmegefäss verbunden sein, oder auch fest mit dem Entnahmegefäss verbunden sein. Zum Zwecke einer erleichterten Reinigung ist jedoch ein aufsetz- und gegebenenfalls aufschraubbarer Dosierkopf 101 vorzuziehen.

Das Gehäuse 3 weist einen Vorsprung 23 auf, der beispielsweise dem Befestigen der Dosiereinrichtung in einem hier nicht gezeigten Halter dient. Das Gehäuse 3 verjüngt sich zur Austrittsöffnung 7 hin, wodurch die zu dosierende Substanz verbessert der Austrittsöffnung 7 zugeleitet wird. Diese Verjüngung, wenngleich bevorzugt, ist jedoch nicht zwingend notwendig.

Ein Austragungs- und Verschlusselement 106 ragt, wie in der Figur 1 zu sehen ist, aus der Austrittsöffnung 7 teilweise heraus. Es befindet sich dabei in einer teilweisen Offenstellung der Austragungsöffnung 7, das heisst, dass zu dosierende Substanz aus der Austrittsöffnung 7 gelangen kann. Eine mit dem Austragungs- und Verschlusselement 106 verbundene Stange 9 durchsetzt - eine Antriebswelle bildend - das Entnahmegefäss 2 und ragt in der Figur 1 mit ihrem oberen Ende aus dem Entnahmegefäss 2 heraus. Dort weist die Stange 9 einen Kupplungsbereich 19 für eine hier nicht gezeigte Antriebsvorrichtung auf, sei dies ein Handantrieb oder ein motorischer Antrieb.

In der Figur 2a ist ein Dosierkopf 101 mit einer ersten Ausführungsform eines Austragungs- und Verschlusselements 106 in dreidimensionaler Darstellung gezeigt, wobei das Gehäuse 3 des Dosierkopfs 101 der Länge nach aufgeschnitten ist. Die Austrittsöffnung 7 ist teilweise geöffnet. Das Austragungs- und Verschlusselement 106 ist mit der Stange 9, welche sich entlang der Mittellängsachse 4 des Dosierkopfes 101 bzw. der Dosiereinrichtung erstreckt, fest verbunden. Die Stange 9 und damit das Austragungs- und Verschlusselement 106 sind sowohl um die Mittellängsachse 4 rotierbar, als auch entlang dieser verschiebbar ausgestaltet. Dabei wird die Stange 9 vorzugsweise motorisch angetrieben. Es versteht sich von selbst, dass das Austragungs- und Verschlusselement zusammen mit der Stange auch einstückig ausgebildet sein kann.

Das Austragungs- und Verschlusselement 106 weist einen Verschlussbereich 127 auf, welcher zylinderförmig ausgestaltet ist und im Fall der Geschlossenstellung (siehe Figur 2b) passgenau die Austrittsöffnung 7 verschliesst. Im Fall des Dosierens, ist die Austrittsöffnung 7 zumindest teilweise geöffnet, und bildet so eine Durchtrittsöffnung, welche einer wirksamen Austrittsöffnung entspricht. Dabei ragt ein dem Verschlussbereich 127 benachbart angeordneter Austragungsbereich 128 des Austragungs- und Verschlusselements 106 in die Austrittsöffnung 7 hinein.

Die Figur 2b zeigt den Dosierkopf in gleicher Darstellung, wie die Figur 2a, wobei in der Figur 2b die Austrittsöffnung 7 durch das Austragungs- und Verschlusselement 106 vollständig verschlossen ist. Das Öffnen und Schliessen der Austrittsöffnung 7 erfolgt durch das Verschieben des Austragungs- und Verschlusselements 106 entlang der Mittellängsachse 4, d.h. in den Figuren 2a und 2b in vertikaler Richtung.

Im Bereich des Austragungs- und Verschlusselements 106, der bei Bewegung entlang der Mittellängsachse 4 in die Austrittsöffnung 7 ein- bzw. aus dieser ausfahrbar gestaltet ist, weist das Austragungs- und Verschlusselement 106 eine Vertiefung in Form einer Aussparung 120 auf. Die Oberfläche der Aussparung 120 ist stetig und bildet eine Austragungsfläche 110. Die Aussparung 120 liegt im Austragungsbereich 128 des in der Grundform zylindrischen Austragungs- und Verschlusselements 106 und formt diesen. Der Verschlussbereich 127 ist bei dieser Ausführungsform in der für den Betrieb angeordneten Dosiereinrichtung unterhalb des Austragungsbereichs 128 angeordnet, das heisst er bildet das äussere Ende des Austragungs- und Verschlusselements 106. Auf diese Weise kann die die Unterkante des Austragungs- und Verschlusselements 106 bildende Stirnfläche 121 die Austrittsöffnung 7 des Dosierkopfs 101 bündig abschliessen, wie in der Figur 2b gezeigt wird. Dabei besitzt die Austrittsöffnung 7 einen Durchmesser, der im Wesentlichen dem Durchmesser des Austragungs- und Verschlusselements 106 im Verschlussbereich 127 entspricht, so dass ein passgenaues Ein- und Ausfahren des Austragungs- und Verschlusselements 106 in die bzw. aus der Austrittsöffnung 7 und damit ein vollständiges Verschliessen derselben möglich ist.

Prinzipiell könnte in der gezeigten Variante des Austragungs- und Verschlusselements 106 natürlich auch die Austrittsöffnung 7 vermittels des sich oberhalb der Vertiefung 120 angeordneten Bereichs des Austragungs- und Verschlusselements 106 verschlossen werden. Ein bündiges Verschliessen der Austrittsöffnung 7 wird jedoch bevorzugt, da die Gefahr von am Austragungs- und Verschlusselement 106 hängen gebliebener Substanz damit reduziert ist.

Die Austragungsfläche 110 ist eine zumindest einfach gekrümmte, um die Mittellängsachse verwundene Fläche. Die Austragungsfläche 110 könnte jedoch auch im Bereich der Aussparung 120 in zwei Richtungen konkav gekrümmt sein und/oder eine Verwindung um die Mittellängsachse 4 aufweisen. Die Breite sowie die Tiefe der Aussparung 120 im Austragungsbereich 128 verkleinert sich in Richtung des Verschlussbereichs 127.

Beim Verschieben des Austragungs- und Verschlusselements 106 entlang der Mittellängsachse 4 gelangt die Aussparung 120 in den Bereich der Austrittsöffnung 7, wodurch diese, die Durchtrittsöffnung bildend, teilweise geöffnet wird, so dass die zu dosierende Substanz aus dieser Durchtrittsöffnung gelangen kann. Damit kann die Austragung von pulver- oder pastenförmiger Substanz gezielt gesteuert werden, indem jeweils der Austragungsbereich 128 des Austragungs- und Verschlusselements 106 mehr oder weniger tief in die Austrittsöffnung 7 hinein ragt und damit eine in ihrer Grösse variable Durchtrittsöffnung bildet. Für gut rieselfähiges feinkörniges Pulver kann mit dem beschriebenen Dosierkopf 101 ein Volumenstrom erreicht werden, welcher Dosierungen im Mikrogrammbereich ermöglicht. Zur Bestimmung der ausgetragenen Substanzmenge wird bevorzugt eine - hier nicht dargestellte, da nicht Gegenstand der Erfindung - Waage verwendet.

Eine konkave Krümmung der Austragungsfläche 110 und insbesondere eine leichte Verwindung der Aussparung 120 um die Mittellängsachse bewirkt, dass die auszutragende Substanz beim Rotieren des Austragungs- und Verschlusselements 106 gezielt von der Austragungsfläche 110 mitgenommen und ausgetragen wird. Dies ist besonders günstig im Fall von koagulierenden Substanzen, die möglicherweise bei einer Austragungsfläche 110 ohne Krümmung sich zwischen dem Rand der Austrittsöffnung 7 und der Austragungsfläche 110 festsetzen könnten und somit die Durchtrittsöffnung 7 verstopfen könnten. Für das Austragen der Substanz ist der Drehsinn des Austragungs- und Verschlusselements 106 unter anderem der Ausformung seines Austragungsbereichs128 angepasst.

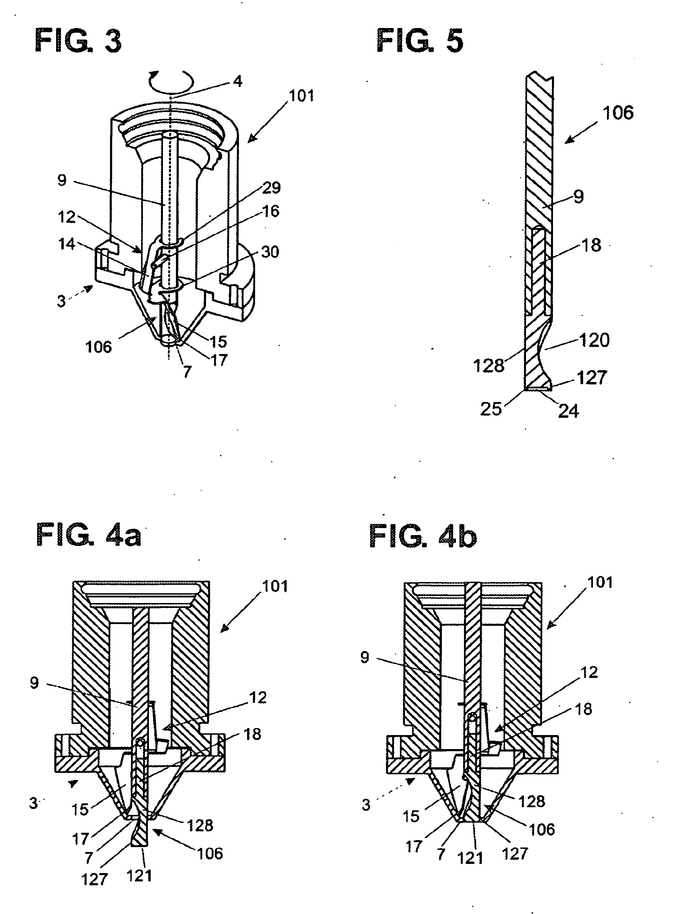

Für den Fall des Dosierens von pulverförmigen Substanzen, die eine schlechte Rieselfähigkeit besitzen, also beispielsweise pappige Pulver, oder für das Dosieren pastenförmiger Substanzen, ist es von erheblichem Vorteil, wenn von einem Zufuhrwerkzeug 12 Gebrauch gemacht wird. In der in Figur 3 dargestellten Ausführungsform ist ein Zufuhrwerkzeug 12 innerhalb des Dosierkopfs 101 angeordnet. Dieses weist eine Haltevorrichtung auf, mit welcher es die Stange 9 an zwei übereinander angeordneten Positionen ringförmig umgreift, wodurch das Zufuhrwerkzeug 12 mit der Stange 9 lose verbunden ist. Ferner besitzt das Zufuhrwerkzeug 12 einen Rührteil 14 und ein rakel- oder schaufelförmig ausgebildetes Zufuhrelement 15. Ein oberer Haltering 29 der Haltevorrichtung des Zufuhrwerkzeugs 12 ist oberhalb eines mit der Stange 9 fest verbundenen Querbolzens 16 angeordnet, ein unterer Haltering 30 unterhalb des Querbolzens 16. Damit ist das Zufuhrwerkzeug 12 in der Dosiervorrichtung geführt. Beim translatorischen Verschieben der Stange 9 entlang der Mittellängsachse 4, wenn die Austrittsöffnung 7 geöffnet oder geschlossen werden soll, ist durch die lose Verbindung des Zufuhrwerkzeugs 12 mit der Stange 9 gewährleistet - hier vermittels Wirkung der Schwerkraft -, dass das Zufuhrwerkzeug 12 stets in losem Kontakt mit dem Rand der Austrittsöffnung 7 bleibt. Ausserdem bewirkt ein bei Rotation der Stange 9 entstehender Kontakt des Querbolzens 16 mit dem Rührteil 14, dass sich das Zufuhrwerkzeug 12 mitdreht.

Das Rührteil 14 dient der Auflockerung der zu dosierenden Substanz, während sie sich im Bereich des Dosierkopfs 101 befindet.

Das Zufuhrelement 15 befindet sich, wie bereits erwähnt, auch in der Offenstellung des Austragungs- und Verschlusselements 106 in Kontakt zum Rande der Austrittsöffnung 7, wodurch beim Drehen desselben die zu dosierende Substanz der Austrittsöffnung 7 zugeführt wird, und sofern Partikel an der Austrittsöffnung 7 hängen bleiben, diese abgelöst werden und das Dosiergut ausgetragen wird. Das Zufuhrelement 15 umfasst vorzugsweise einen flächigen Bereich, der eine dem Rande der Austrittsöffnung 7 zugewandte Spitze 17 aufweist, wobei diese lose mit dem Rand der Austrittsöffnung 7 in Kontakt ist. Das Zufuhrelement 15, beziehungsweise dessen flächiger Bereich, weist bevorzugt eine gewölbte oder gekrümmte Form auf, wodurch das Zufuhrelement 15 stark koagulierendes Pulver schaufelartig mitnehmen und der Austrittsöffnung 7 zuführen kann.

Infolge der Rotation des Zufuhrwerkzeugs 12 um die Mittellängsachse 4, bewegt sich das Zufuhrelement 15 auf einer Kreisbahn. Es hat sich als vorteilhaft erwiesen, wenn die Position des Zufuhrelements 15 einen spitzen Anstellwinkel in tangentialer Richtung bezüglich seiner Kreisbahn bei Rotation um die Mittellängsachse 4 aufweist und/oder das Zufuhrelement 15 unter einem spitzen Anstellwinkel gegenüber der Mittellängsachse 4 geneigt ist. Insbesondere ist der Anstellwinkel des Zufuhrelements der Konsistenz der auszutragenden Substanz angepasst Aufgrund der Form und Ausrichtung des Zufuhrwerkzeugs 12, ist für die in den Figuren 2a und 2b gezeigten Ausführungsform der Dosiervorrichtung die Drehrichtung des Austragungs- und Verschlusselements 6, und damit hier auch des Zufuhrwerkzeugs 12, vorgegeben. Es erfolgt eine Drehung im Uhrzeigersinn.

Wie bereits oben erwähnt, ist das Zufuhrwerkzeug 12 derart an der Stange 9 gelagert beziehungsweise geführt, dass es sich einerseits mit dieser mit dreht, andererseits aber bei einer Verschiebung der Stange 9 entlang der Mittellängsachse im Gegensatz zu dieser beziehungsweise zum Austragungs- und Verschlusselement 106 seine Position beibehält, das heisst mit dem Zufuhrelement 15, insbesondere seiner Spitze 17 stets in losem Kontakt mit dem Rand der Austrittsöffnung 7 steht und so das Pulver beim Austragen gegen diesen führt, nach unten drückt und vom Rand abstreift. Dies ist in den Figuren 4a und 4b dargestellt, welche eine Schnittzeichnung des Dosierkopfs 101 zeigen.

In der für die Figuren 4a und 4b gewählten Darstellung ist auch die Verbindung des Austragungs- und Verschlusselements 106 mit der Stange 9 zu erkennen. Dabei greift ein Bolzen 18 mit gegenüber dem Durchmesser des Austragungs- und Verschlusselements 106 verringertem Durchmesser in die Stange 9 ein und ist beispielsweise mit dieser verschraubt, verklebt, verlötet oder in sonstiger Weise fest verbunden.

Das in den vorangehenden Figuren gezeigte Austragungs- und Verschlusselement 106 ist in der Figur 5 in einer Schnittzeichnung zu sehen. Das Austragungs- und Verschlusselement 106 ist mittels eines Bolzens 18, insbesondere eines Schraubbolzens an der Stange 9 befestigt. Wie hier beispielhaft dargestellt ist, kann ein Austragungs- und Verschlusselement 106, dessen Verschlussbereich 127 im Falle einer geschlossenen Austrittsöffnung 7 bündig mit dem Gehäuse 3 abschliesst (wie z.B. in Figur 4b gezeigt), an seiner Stirnfläche eine Vertiefung 24 aufweisen. Diese Vertiefung 24 ist von einem Rand 25, der als Tropfkante wirkt, umschlossen, wodurch beim Dosieren stark koagulierender Substanzen keine Anhäufung von Material an der Stirnfläche erfolgen kann.

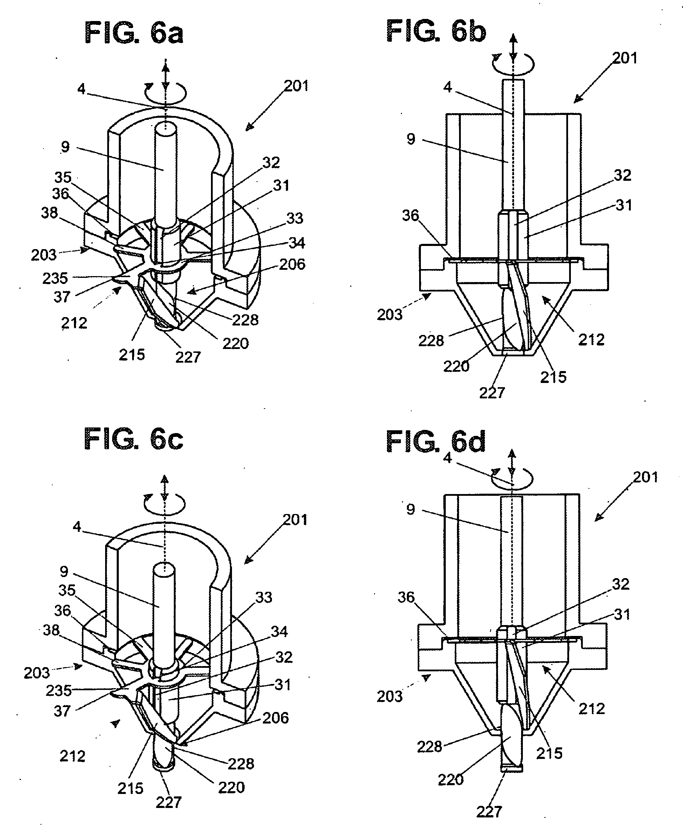

Die Figuren 6a bis 6d zeigen eine zweite Ausgestaltung des Austragungs- und Verschlusselements 206 und dessen Anordnung im Dosierkopf 201 in der Geschlossenstellung sowie in der Offenstellung. Die Figuren 6a und 6c zeigen den Dosierkopf 201 in einer perspektivischen Darstellung und die Figur 6b und 6d aus der Seitenansicht, wobei das Gehäuse 203 jeweils der Länge nach aufgeschnitten ist. Der Austragungsbereich 228 weist eine Aussparung 220 auf, die von einer konkaven Austragungsfläche 210 begrenzt ist. Die Ränder der Aussparung 220 sind nicht parallel zur orthogonal zur Mittellängsachse 4 verlaufenden Ebene ausgerichtet, sondern schliessen mit dieser einen beliebigen Winkel ein. Eine solche Aussparung 220 lässt sich vermittels eines zylindrischen Einschnitts unter einem von 90° verschiedenen Winkel zur Mittellängsachse 4 herstellen. Der Austragungsbereich 228 und der Verschlussbereich 227 weisen einen geringfügig unterschiedlichen Durchmesser auf, wodurch die Austrittsöffnung 7 hermetisch verschlossen werden kann, jedoch im geöffneten Zustand noch genügend Spiel für die Bewegung des Austragungs- und Verschlusselements 206 besitzt.

Das in den Figuren 6a bis 6d gezeigte zweite Zufuhrwerkzeug 212 weist ein Zufuhrelement 215 auf, welches ähnlich dem in den Figuren 3, 4a und 4b gezeigten ausgestaltet ist. Insbesondere weist die Ausrichtung des Zufuhrelements 215 in Bezug auf die Mittellängsachse 4 einen spitzen Anstellwinkel in tangentialer Richtung bezüglich seiner Kreisbahn bei Rotation um die Mittellängsachse 4 auf und ist unter einem spitzen Anstellwinkel gegenüber der Mittellängsachse 4 geneigt. Ferner ist das Zufuhrelement 215 unter einem Winkel zum Radius seiner Kreisbahn angeordnet und berührt den Rand der Austrittsöffnung 7 tangential. Der Lagerung und Führung des Zufuhrwerkzeugs 212 dient ein Mitnahmebereich 31 der Stange 9, welcher mindestens eine über ihre gesamte Länge sich erstreckende Nut 32 aufweist. Um den Mitnahmebereich 31 ist ein Haltering 33 des Zufuhrwerkzeugs 212 lose angeordnet, welcher mit einem Zapfen 34 in die Nut 32 eingreift. Bevorzugt sind zwei einander gegenüber liegende Nuten 32 und Zapfen 34 vorhanden, wobei die jeweils zweiten hier in der Figur nicht zu sehen wären, da durch die Stange 9 verdeckt. Dadurch ist das Zufuhrwerkzeug 212 gezwungen, sich mit der Stange 9 mitzudrehen, ist jedoch translatorisch entlang der Mittellängsachse 4 frei beweglich. Am Haltering 33 sind mehrere strahlenförmig sich von der Mittellängsachse 4 nach aussen erstreckende Ausleger 35 angeordnet, welche mit einer Spitze 37 in eine Kreisnut 36 am Gehäuse 203 hineinragen und dort beweglich geführt sind. Weitere Ausleger ohne Spitze 37 dienen als Rührelemente 38. Der Haltering 33, der Zapfen 34, die Ausleger 35 und die Rührelemente 38 liegen in einer Ebene orthogonal zur Mittellängsachse 4. Allerdings können die Rührelemente 38 auch nach oben oder nach unten gebogen sein und damit die Auflockerung der zu dosierenden Substanz verbessern. Mit einem Ausleger 235 ist das Zufuhrelement 215, vorzugsweise einstückig, verbunden Das Zufuhrwerkzeug 212 ist bevorzugt einstückig aus einem Blech oder aus Kunststoff hergestellt.

Eine dritte Form des die Austrittsöffnung 7 verschliessenden Austragungs- und Verschlusselements 306 ist in der Figur 7a in einer dreidimensionalen Darstellung des Dosierkopfs 301 und in der Figur 7b in der Seitenansicht zu sehen, wobei das Gehäuse 303 jeweils der Länge nach aufgeschnitten ist. Dabei ist der Austragungsbereich 328 des Austragungs- und Verschlusselements 306 als eine seitlich, das heisst aussermittig angeordnete nach unten spitz zulaufende, das heisst in ihrer Breite und Tiefe variable Kerbe 46 ausgestaltet, wobei die Breite und die Tiefe zum Verschlussbereich 227 hin abnehmen. Die Austragungsfläche ist hier unstetig. Sie erfasst beim Abfüllen die auszutragende Substanz und trägt sie vermittels Rotation aus. Dabei gewährleistet diese Form der spitz nach unten zulaufenden Kerbe 46gleichzeitig je nach Position des Austragungs- und Verschlusselements 306 innerhalb der Austrittsöffnung 7 eine kontinuierlich variable Durchtrittsöffnung. Es können auch mehrere Kerben, vorzugsweise in gleichmässiger Verteilung um den Umfang des Austragungsbereichs, an diesem angeordnet sein. Die Kerben können - wie in den Figuren 7a und 7b gezeigt - mit ihrer Spitze vertikal nach unten ausgerichtet sein oder auch schräg in den Austragungsbereich eingearbeitet sein.

In den Figuren 8a und 8b ist ein Dosierkopf 401 in zur Figur 7 analoger Darstellung gezeigt. Dieser Dosierkopf 401 weist eine vierte Ausführungsform des Austragungs- und Verschlusselements 406 und eine dritte Ausführungsform des Zufuhrwerkzeugs 412 auf. Das Austragungs- und Verschlusselement 406 ist in seinem Verschlussbereich 227 gestaltet, wie die dritte und vierte Ausführungsform desselben, sein Austragungsbereich 428 weist jedoch mehrere längliche Nuten 54 mit variabler Tiefe und Breite im Mantel des im wesentlichen zylinderförmig ausgestalteten Austragungs- und Verschlusselements 406 auf. Diese Nuten 54 sind in ihrer Längsausdehnung unter einem spitzen Winkel bezüglich der Mittellängsachse 4 ausgerichtet und stellen somit in geöffnetem Zustand des Austragungs- und Verschlusselements 406 mehrere Durchtrittsöffnungen für auszutragende Substanzen dar.

Das Zufuhrwerkzeug 412 besitzt drei Zufuhrelemente 415, welche einstückig mit einem Haltering 433 verbunden sind. Der Haltering 433 ist in gleicher Weise, wie bereits oben anhand der Figuren 6a bis 6d beschrieben, über einen Mitnahmebereich 31 und in dessen Nuten 32 eingreifende Zapfen 34 an der Stange 9 gelagert. Im Gegensatz zur dort dargestellten Ausführungsform, besitzt das hier gezeigte Zufuhrwerkzeug 412 keine Rührelemente 38, obwohl diese auch vorhanden sein könnten. Die Funktion der Rührens und Auflockerns der auszutragenden Substanz kann jedoch auch durch die drei Ausleger 435, sowie die drei Zufuhrelemente 415 erfüllt werden. Letztere sind im wesentlichen wie das weiter oben anhand der Figuren 6 und 7 beschriebene Zufuhrelement 215 gestaltet und im Dosierkopf 401 ausgerichtet. Die drei Ausleger 435, von denen jeder mit einem Zufuhrelement 415 verbunden ist, weisen eine Spitze 37 auf, welche jeweils in der Kreisnut 36 des Gehäuses 3 beweglich geführt sind.

Die Figuren 9a und 9b zeigen stark schematisiert eine Sicht von oben in den Dosierkopf 201 und 301, wobei das jeweilige Austragungs- und Verschlusselement 206, 306 im Bereich der Austrittsöffnung 7 geschnitten gezeigt ist. Dadurch wird die Form der jeweiligen Durchtrittsöffnung erkennbar. Vom Zufuhrwerkzeug ist in den Figuren 9a und 9b ein Zufuhrelement 315 sichtbar, welches der einfachen Illustration halber als ein von ebenen Flächen begrenztes Blech in der seitlichen Aufsicht gezeichnet ist. Das Zufuhrelement 315 ist unter einem spitzen Winkel zum Radius seiner Kreisbahn ausgerichtet und berührt den Rand der Austrittsöffnung 7 tangential und führt somit bei Rotation (siehe Pfeil) des Austragungs- und Verschlusselements 206, 306 sowie des Zufuhrwerkzeugs die zu auszutragende Substanz der jeweiligen Durchtrittsöffnung zu.

Wie bereits oben erwähnt, kann die Ausrichtung eines Zufuhrelements in Bezug auf die Mittellängsachse 4 auch einen spitzen Anstellwinkel in tangentialer Richtung bezüglich seiner Kreisbahn bei Rotation um die Mittellängsachse 4 aufweisen und/oder unter einem spitzen Anstellwinkel gegenüber der Mittellängsachse 4 geneigt sein, wobei diese Winkel je nach zu dosierender Substanz variiert werden können, beispielsweise durch Austausch des Zufuhrwerkzeugs im Dosierkopf.

Mittels gestrichelter Linien sind im Bereich der Austrittsöffnung 7 - von links oben nach rechts unten in den Figuren 9a und 9b - weitere eine wirksame Austrittsöffnung beziehungsweise Durchtrittsöffnung begrenzende Positionierungen des Austragungs- und Verschlusselements 206, 306 angedeutet. Es versteht sich von selbst, dass diese lediglich repräsentativ für eine kontinuierliche Variation der Durchtrittsöffnung stehen.

In Figur 10 ist die Ausgestaltung des Austragungs- und Verschlusselements 206, wie sie bereits anhand der Figuren 6a bis 6d beschrieben wurde, in verschiedenen Ansichten zu sehen: in Figur 10a seitlich mit Blick auf die Austragungsfläche 210, in Figur 10b gegenüber der Darstellung von Figur 10a um 90° gedreht, in Figur 10c und in Figur 10d in einer dreidimensionalen Darstellung. Die Aussparung 220 im Austragungsbereich 228 ist von einer konkaven Austragungsfläche 210 begrenzt, deren Ränder nicht parallel zur orthogonal zur Mittellängsachse 4 ausgerichteten Ebene ausgerichtet sind, sondern mit dieser einen beliebigen Winkel einschliessen. Eine solche Aussparung lässt sich vermittels eines zylindrischen Einschnitts unter einem von 90° verschiedenen Winkel zur Mittellängsachse 4 herstellen.

Aus den Figuren 10a bis 10d geht ausserdem hervor, dass der Durchmesser am Austragungsbereich 228 etwas geringer ist als am Verschlussbereich 227. Es versteht sich von selbst, dass die Austrittsöffnung 7 des Dosierkopfs einen dem Verschlussbereich 227 angepassten Durchmesser besitzt, wodurch sie hermetisch verschlossen werden kann, jedoch im geöffneten Zustand genügend Spiel für die Rotation aufweist. Diese Form eines Verschlussbereichs mit gegenüber dem jeweiligen Austragungsbereich verändertem Durchmesser ist auch für die in den vorhergehenden Figuren dargestellten Austragungs- und Verschlusselemente denkbar und realisierbar.

Die Figur 10e zeigt einen Schnitt durch ein Austragungs- und Verschlusselement 206 gemäss den Figuren 10a bis 10d im Bereich der teilweise verschlossenen Austrittsöffnung 7. Weitere eine Durchtrittsöffnung begrenzende Positionierungen des Austragungs- und Verschlusselements 206, die auch hier repräsentativ für eine kontinuierliche Variation der wirksamen Austrittsöffnung stehen, sind durch gestrichelte Linien angedeutet. Je nachdem, wie weit das Austragungs- und Verschlusselement 206 in die Austrittsöffnung 7 hinein verschoben ist, kommt durch die variable Breite und Tiefe der sich in Richtung Verschlussbereich 227 verkleinernden Aussparung eine in ihrer Grösse variable Durchtrittsöffnung zustande.

Die Figur 11 zeigt die dritte Ausgestaltung des Verschlusselements 306, wie sie in den Figuren 7a und 7b dargestellt ist, in verschiedenen Ansichten; Figur 11 a seitlich mit Blick auf die Austragungsfläche, Figur 11b in einer dreidimensionalen Darstellung. Die Kerbe 46, welche im Übrigen auch schräg gegenüber der Richtung der Mittellängsachse 4 ausgerichtet sein kann, erfasst beim Abfüllen die auszutragende Substanz und führt sie vermittels Rotation der Austrittsöffnung 7 zu. Ferner gewährleistet auch diese Ausführungsform des Austragungs- und Verschlusselements 306 ein kontinuierliches Öffnen und Verschliessen der Austrittsöffnung 7. Wie die Figur 11c zeigt, die einen Schnitt durch ein Austragungs- und Verschlusselement 306 gemäss den Figuren 11 a und 11 b im Bereich der teilweise verschlossenen Austrittsöffnung 7 darstellt, ist der Querschnitt der Durchtrittsöffnung dreieckförmig, wobei eine Seite, namentlich, die durch den Rand der Austrittsöffnung 7 begrenzte Seite, einen Kreisbogen bildet. Selbstredend ist auch hier die Durchtrittsöffnung kontinuierlich vergrösser- und verkleinerbar. In den Figuren 11a bis 11c ist lediglich eine Kerbe 46 im Austragungsbereich 328 angeordnet. Es können jedoch auch zwei solcher Kerben 46 beispielsweise einander gegenüberliegend am Austragungs- und Verschlusselement angebracht sein. Auch hier ist, wie bereits anhand der Figur 10 beschrieben, der Durchmesser am Austragungsbereich 328 etwas geringer ist als am Verschlussbereich 327.

In den Figuren 12a bis 12c ist in zu den Figuren 11a bis 11c analoger Darstellung eine fünfte Ausgestaltung des Austragungs- und Verschlusselements 506 gezeigt. Im Austragungsbereich 528 sind als Vertiefungen zwei Kerben 546 (nur eine davon ist in den Darstellungen gemäss Figur 12a und 12b zusehen) an dem in der Grundform zylindrischen Ausgestaltung des Austragungs- und Verschlusselement 506 ausgebildet. Die Grundlinie 11 dieser Kerben 546 verlaufen nicht parallel zur Mittellängsachse, wie dies im Fall der in den Figuren 11a bis 11c gezeigten Variante des Austragungs- und Verschlusselements 306 der Fall ist, sondern sind schräg dazu ausgerichtet.

In der Figur 13 ist die vierte Ausgestaltung des Austragungs- und Verschlusselements 406, wie sie in den Figuren 8a und 8b gezeigt ist, in der Ansicht 13a seitlich mit Blick auf die Austragungsfläche und in 13b in einer dreidimensionalen Darstellung zu sehen. Die in dieser Ausführungsform mehrfach angeordneten länglichen Nuten 45 mit variabler Tiefe und Breite im Mantel des im Wesentlichen zylinderförmig ausgestalteten Austragungs- und Verschlusselements 406 werden beispielsweise mittels Kugelfräsen erzeugt. Wie die Figur 13c zeigt, die einen Schnitt durch ein Austragungs- und Verschlusselement 406 gemäss den Figuren 13a und 13b im Bereich der teilweise verschlossenen Austrittsöffnung 7 darstellt, ist der Querschnitt der Durchtrittsöffnungen kontinuierlich variierbar.

Figur 14 zeigt eine sechste Ausgestaltung des Austragungs- und Verschlusselements 806, in verschiedenen Ansichten; Figur 14a seitlich mit Blick auf die Austragungsfläche, Figur 14b in einer dreidimensionalen Darstellung, Figur 14c in einer Schnittdarstellung in einer orthogonal zur Mittellängsachse ausgerichteten Ebene im Bereich der Austrittsöffnung 7. Drei längliche Aussparungen 45 mit spiegelsymmetrischen kreisabschnittförmigen Rändern sind mit ihrer Symmetrieebene parallel zur Mittellängsachse 4 verlaufend um den Austragungsbereich 828 angeordnet. Besonders deutlich wird anhand der Figur 14c, wie dadurch bei geöffnetem Austragungs- und Verschlusselement 806 drei Bereiche der Austrittsöffnung 7 zum Austragen der Substanz zur Verfügung stehen und durch translatorisches Verschieben des Austragungs- und Verschlusselements 806 kontinuierlich in ihrer Grösse veränderbare Durchtrittsöffnungen bilden.

Je nachdem, wie weit ein Austragungs- und Verschlusselement in die Austrittsöffnung hinein verschoben ist, kommen durch die variable Breite und Tiefe der sich in Richtung Verschlussbereich verkleinernden Aussparung eine oder mehrere in ihrer Grösse variable Durchtrittsöffnungen zustande.

Varianten des Gehäuses des Dosierkopfs ebenso wie verschiedene Ausführungsformen des Antriebs sind vorstellbar. Prinzipiell kann das Zufuhrwerkzeug auch einen eigenen Antrieb haben und unabhängig vom Austragungs- und Verschlusselement sowohl translatorisch als auch rotatorisch bewegt werden, wobei zumindest im Falle des Austragens von zu dosierender Substanz das Zufuhrwerkzeug in losem Kontakt mit dem Rand der Austrittsöffnung ist.

Die Stange mit dem Austragungs- und Verschlusselement kann in weiterer Ausgestaltung in Richtung der Mittellängsachse vorgespannt sein, so dass bei entkoppeltem Antrieb die Austrittsöffnung selbsttätig verschlossen wird.

### Bezugszeichenliste

- 101, 201, 301, 401: Dosierkopf
- 2: Entnahmegefäss
- 3, 203,303: Gehäuse
- 4: Mittellängsachse
- 5: Innengewinde
- 106, 206, 306, 406, 506, 806: Austragungs- und Verschlusselement
- 7: Austrittsöffnung
- 8: Aussengewinde
- 9: Stange
- 110, 210: Austragungsfläche
- 11: Grundlinie der Kerbe
- 12, 212, 412: Zufuhrwerkzeug
- 14: Rührteil
- 15,215,315,415: Zufuhrelement
- 16: Querbolzen
- 17: Spitze des Zufuhrelements
- 18: Bolzen
- 19: Kupplungsbereich
- 120, 220, 820: Aussparung
- 121: Stirnfläche
- 23: Vorsprung
- 24: Vertiefung
- 25: Rand der Vertiefung
- 127, 227: Verschlussbereich
- 128, 228, 328, 428, 528, 828: Austragungsbereich
- 29: Oberer Haltering
- 30: Unterer Haltering
- 31: Mitnahmebereich
- 32: Nut
- 33,433: Haltering
- 34: Zapfen
- 35,235,435: Ausleger
- 36: Kreisnut
- 37: Spitze
- 38: Rührelement
- 45: längliche Nut
- 46, 546: Kerbe

## Patentansprüche

1. Dosiereinrichtung für pulver- oder pastenförmige Substanzen mit einem Entnahmegefäss (2) und einem damit verbundenen oder verbindbaren Dosierkopf (101, 201, 301, 401), der ein Gehäuse (3, 203,303) mit einer mit kreisförmigem Querschnitt versehenen Austrittsöffnung (7) und ein Austragungs- und Verschlusselement (106, 206, 306, 406, 506, 806) aufweist, wobei die Austrittsöffnung (7) und das Austragungs- und Verschlusselement (106, 206, 306, 406, 506, 806) auf der Mittellängsachse (4) des Dosierkopfs (101, 201, 301, 401) angeordnet sind, und wobei das Austragungs- und Verschlusselement (106, 206, 306, 406, 506, 806) relativ zum Gehäuse (3, 203,303) um die Mittellängsachse (4) rotierbar und entlang der Mittellängsachse (4) bezüglich der Austrittsöffnung (7) translatorisch verschiebbar ausgestaltet ist, **dadurch gekennzeichnet, dass** das Austragungs- und Verschlusselement (106, 206, 306, 406, 506, 806) in seiner Grundform zylinderförmig ausgebildet ist, mindestens einen dem Verschliessen der Austrittsöffnung (7) dienenden Verschlussbereich (127, 227) und einen diesem benachbart angeordneten der Austragung von zu dosierender Substanz dienenden Austragungsbereich (128, 228, 328, 428, 528, 828) aufweist, wobei der Austragungsbereich (128, 228, 328, 428, 528, 828) mit mindestens einer vom Zylindermantel ausgehenden Vertiefung versehen ist.

2. Dosiereinrichtung nach Anspruch 1, **dadurch gekennzeichnet, dass** die Vertiefung eine stetige, eine Austragungsfläche (110, 210) bildende Oberfläche aufweist.

3. Dosiereinrichtung nach Anspruch 1, **dadurch gekennzeichnet, dass** die Vertiefung in Form einer Kerbe (46, 546) ausgebildet ist und eine unstetige eine Austragungsfläche bildende Oberfläche aufweist.

4. Dosiereinrichtung nach Anspruch 2, **dadurch gekennzeichnet, dass** die Austragungsfläche (110, 210) in einer oder in zwei Richtungen konkav gekrümmt ausgeformt ist.

5. Dosiereinrichtung nach Anspruch 3 oder 4, **dadurch gekennzeichnet, dass** die Austragungsfläche (110, 210) um die Mittellängsachse (4) verwunden ausgeformt ist.

6. Dosiereinrichtung nach einem der Ansprüche 1 bis 5, **dadurch gekennzeichnet, dass** der Verschlussbereich (127, 227) in der Geschlossenstellung des Austragungs- und Verschlusselements (106, 206, 306, 406, 506, 806) an dessen in der Betriebsstellung unterem Ende bündig mit dem Gehäuse (3, 203,303) abschliessend, angeordnet ist.

7. Dosiereinrichtung nach Anspruch 6, **dadurch gekennzeichnet, dass** der Verschlussbereich (127, 227) an seiner Stirnfläche (121) eine von einem als Tropfkante wirkenden Rand (25) umschlossene Vertiefung (24) aufweist.

8. Dosiereinrichtung nach einem der Ansprüche 1 bis 7, **dadurch gekennzeichnet, dass** die Breite und/oder die Tiefe der mindestens einen Vertiefung des Austragungsbereichs (128, 228, 328, 428, 528, 828) sich in Richtung des Verschlussbereichs (127, 227) verkleinernd variiert.

9. Dosiereinrichtung nach einem der Ansprüche 1 bis 8, **dadurch gekennzeichnet, dass** der Austragungsbereich (128, 228, 328, 428, 528, 828) des Austragungs- und Verschlusselements (106, 206, 306, 406, 506, 806) eine Form aufweist, die für ein sich mit seinem Austragungsbereich (128, 228, 328, 428, 528, 828) in der Austrittsöffnung (7) befindliches Austragungs- und Verschlusselement (6, 106, 206, 306, 406, 506, 806) mindestens eine aussermittig angeordnete und nicht konzentrisch ausgebildete Durchtrittsöffnung freilässt.

10. Dosiereinrichtung nach einem der Ansprüche 1 bis 9, **dadurch gekennzeichnet, dass** das Austragungs- und Verschlusselement (106, 206, 306, 406, 506, 806) mit einer entlang der Mittellängsachse (4) angeordneten Stange (9), welche das Entnahmegefäss (2) als Antriebswelle durchdringt, verbunden ist.

11. Dosiereinrichtung nach einem der Ansprüche 1 bis 10, **dadurch gekennzeichnet, dass** ein der Zufuhr von zu dosierender Substanz dienendes Zufuhrwerkzeug (12, 12/04/2007 212, 412) vorhanden ist, welches um die Mittellängsachse (4) rotierbar ausgestaltet ist und relativ zum Austragungs- und Verschlusselement (106, 206, 306, 406, 506, 806) translatorisch entlang der Mittellängsachse (4) verschiebbar gelagert ist.

12. Dosiereinrichtung nach Anspruch 11, **dadurch gekennzeichnet, dass** das Zufuhrwerkzeug (12, 212, 412) an der Stange (9) und relativ zu dieser translatorisch entlang der Mittellängsachse (4) verschiebbar gelagert und/oder geführt ist.

13. Dosiereinrichtung nach Anspruch 11 oder 12, **dadurch gekennzeichnet, dass** das Zufuhrwerkzeug (12, 212, 412) ein Rührteil (14) und ein Zufuhrelement (15, 215, 315, 415) aufweist, wobei das Zufuhrelement (15, 215, 315, 415) im Betrieb der Dosiereinrichtung stets mit dem Rand der Austrittsöffnung (7) in losem Kontakt ist.

14. Dosiereinrichtung nach einem der Ansprüche 1 bis 13 **dadurch gekennzeichnet, dass** das Gehäuse (3, 203,303) sich in Richtung zur Austrittsöffnung (7) verjüngt.

## Claims

1. Dosage-dispensing device for substances in powder- or paste form with a supply container (2) and with a dosage-dispensing head (101, 201, 301, 401) that is connected or connectable to the supply container (2), said dosage-dispensing head comprising a housing (3, 203, 303) with an outlet orifice (7) of circular cross-section and a delivery- and closure element (106, 206, 306, 406, 506, 806), wherein the outlet orifice (7) and the delivery- and closure element (106, 206, 306, 406, 506, 806) are arranged on the central lengthwise axis (4) of the dosage-dispensing head (101, 201, 301, 401), and the delivery- and closure element (106, 206, 306, 406, 506, 806) is designed to be rotatable about the central lengthwise axis (4) in relation to the housing (3, 203, 303) and to be capable of translatory displacement along the central lengthwise axis (4) relative to the outlet orifice (7), **characterized in that** the delivery- and closure element (106, 206, 306, 406, 506, 806) in its basic configuration is of a cylindrical shape and has at least one closure portion (127, 227) that serves to close off the outlet orifice (7) and further has, adjacent to the closure portion, a delivery portion (128, 228, 328, 428, 528, 828) that serves to deliver the substance to be dispensed, wherein said delivery portion (128, 228, 328, 428, 528, 828) comprises at least one recess that is indented from the cylinder wall.

2. Dosage-dispensing device according to claim 1, **characterized in that** the recess has a continuous surface that forms a delivery surface (110, 210).

3. Dosage-dispensing device according to claim 1, **characterized in that** the recess is configured in the shape of a triangular groove (46, 546) and has a discontinuous surface that forms a delivery surface.

4. Dosage-dispensing device according to claim 2, **characterized in that** the delivery surface (110, 210) has a shape that is concave-curved in one or two directions.

5. Dosage-dispensing device according to claim 3 or 4, **characterized in that** the delivery surface (110, 210) is shaped with a spiraling twist about the central lengthwise axis (4).

6. Dosage-dispensing device according to one of the claims 1 to 5, **characterized in that** in the closed position of the delivery- and closure element (106, 206, 306, 406, 506, 806) the closure portion (127, 227) at its bottom end relative to the operating position of the dosage-dispensing device is in flush alignment with the housing (3, 203, 303).

7. Dosage-dispensing device according to claim 6, **characterized in that** the closure portion (127, 227) at its end surface (121) has a recess (24) that is surrounded by a rim (25) which works as a drop-releasing edge.

8. Dosage-dispensing device according to one of the claims 1 to 7, **characterized in that** the width and/or the depth of the at least one recess of the delivery portion (128, 228, 328, 428, 528, 828) varies so that its profile area gets smaller in the direction towards the closure portion (127, 227).

9. Dosage-dispensing device according to one of the claims 1 to 8, **characterized in that** the delivery portion (128, 228, 328, 428, 528, 828) of the delivery- and closure element (106, 206, 306, 406, 506, 806) is shaped so that when the delivery portion (128, 228, 328, 428, 528, 828) of the delivery- and closure element (106, 206, 306, 406, 506, 806) is positioned in the outlet orifice (7), at least one passage opening, is left free which is arranged off-center and has a non-concentric configuration.

10. Dosage-dispensing device according to one of the claims 1 to 9, **characterized in that** the delivery- and closure element (106, 206, 306, 406, 506, 806) is connected to a rod (9) which is arranged along the central lengthwise axis (4) and traverses the supply container (2) as a drive shaft.

11. Dosage-dispensing device according to one of the claims 1 to 10, **characterized in that** the dosage-dispensing device comprises a conveying tool (12, 212, 412) which serves to convey substance to be dispensed and which is configured to be rotatable about the central lengthwise axis (4) and supported in a way that allows translatory movement relative to the delivery- and closure element (106, 206, 306, 406, 506, 806) along the central lengthwise axis 4.

12. Dosage-dispensing device according to claim 11, **characterized in that** the conveying tool (12, 212, 412) is supported and/or guided on the rod (9) in a way that allows translatory movement along the rod (9) and relative to said rod (9).

13. Dosage-dispensing device according to claim 11 or 12, **characterized in that** the conveying tool (12, 212, 412) comprises a stirrer part (14) and a conveying element (15, 215, 315, 415), wherein the conveying element (15, 215, 315, 415) is always in loose contact with the rim of the outlet orifice (7) when the dosage-dispensing device is in operation.

14. Dosage-dispensing device according to one of the claims 1 to 13, **characterized in that** the housing (3, 203, 303) has a narrowing taper in the direction towards the outlet orifice (7).

## Revendications

1. Dispositif de dosage pour des substances sous forme de poudre ou de pâte, comprenant un récipient de prélèvement (2) et une tête de dosage (101, 201, 301, 401) reliée ou pouvant être reliée à ce récipient, laquelle tête présente un boîtier (3, 203, 303) avec une ouverture de sortie (7) dotée d'une section circulaire et un élément d'évacuation et de fermeture (106, 206, 306, 406, 506, 806), l'ouverture de sortie (7) et l'élément d'évacuation et de fermeture (106, 206, 306, 406, 506, 806) étant disposés sur l'axe longitudinal médian (4) de la tête de dosage (101, 201, 301, 401), et l'élément d'évacuation et de fermeture (106, 206, 306, 406, 506, 806) étant conçu de façon à pouvoir tourner par rapport au boîtier (3, 203, 303) autour de l'axe longitudinal médian (4) et à pouvoir coulisser par translation le long de l'axe longitudinal médian (4) par rapport à l'ouverture de sortie (7), **caractérisé en ce que** l'élément d'évacuation et de fermeture (106, 206, 306, 406, 506, 806) est conçu cylindrique dans sa forme de base, présente au moins une zone de fermeture (127, 227) servant à la fermeture de l'ouverture de sortie (7) et une zone d'évacuation (128, 228, 328, 428, 528, 828) disposée à proximité de cette zone et servant à l'évacuation de la substance à doser, la zone d'évacuation (128, 228, 328, 428, 528, 828) étant dotée d'au moins une cavité partant de l'enveloppe cylindrique.

2. Dispositif de dosage selon la revendication 1, **caractérisé en ce que** la cavité présente une surface continue, formant une surface d'évacuation (110, 210).

3. Dispositif de dosage selon la revendication 1, **caractérisé en ce que** la cavité est conçue sous forme d'une entaille (46, 546) et présente une surface discontinue et formant une surface d'évacuation.

4. Dispositif de dosage selon la revendication 2, **caractérisé en ce que** la surface d'évacuation (110, 210) est formée avec une courbure concave dans une ou dans deux directions.

5. Dispositif de dosage selon la revendication 3 ou 4, **caractérisé en ce que** la surface d'évacuation (110, 210) est formée de façon tordue autour de l'axe longitudinal médian (4).

6. Dispositif de dosage selon l'une des revendications 1 à 5, **caractérisé en ce que** la zone de fermeture (127, 227) est disposée, lorsque l'élément d'évacuation et de fermeture (106, 206, 306, 406, 506, 806) est dans la position fermée, sur l'extrémité, inférieure dans la position de service, de cet élément, au même niveau que le boîtier (3, 203, 303).

7. Dispositif de dosage selon la revendication 6, **caractérisé en ce que** la zone de fermeture (127, 227) présente sur sa face frontale (121) une cavité (24) entourée par un bord (25) agissant comme arrête anti-goutte.

8. Dispositif de dosage selon l'une des revendications 1 à 7, **caractérisé en ce que** la largeur et/ou la profondeur de la au moins une cavité de la zone d'évacuation (128, 228, 328, 428, 528, 828) varie en se réduisant dans le sens de la zone de fermeture (127, 227).

9. Dispositif de dosage selon l'une des revendications 1 à 8, **caractérisé en ce que** la zone d'évacuation (128, 228, 328, 428, 528, 828) de l'élément d'évacuation et de fermeture (106, 206, 306, 406, 506, 806) présente une forme qui libère au moins une ouverture de passage disposée de façon excentrée et non conçue de façon concentrique pour un élément d'évacuation et de fermeture (6, 106, 206, 306, 406, 506, 806) se trouvant avec sa zone d'évacuation (128, 228, 328, 428, 528, 828) dans l'ouverture de sortie (7).

10. Dispositif de dosage selon l'une des revendications 1 à 9, **caractérisé en ce que** l'élément d'évacuation et de fermeture (106, 206, 306, 406, 506, 806) est relié à une barre (9) disposée le long de l'axe médian longitudinal (4), laquelle traverse le récipient de prélèvement (2) comme arbre d'entraînement.

11. Dispositif de dosage selon l'une des revendications 1 à 10, **caractérisé en ce qu'**un outil d'alimentation (12, 212, 412) servant à l'alimentation de la substance à doser est présent, lequel est conçu de façon à pouvoir tourner autour de l'axe longitudinal médian (4) et monté de façon à pouvoir coulisser par translation par rapport à l'élément d'évacuation et de fermeture (106, 206, 306, 406, 506, 806) le long de l'axe longitudinal médian (4).

12. Dispositif de dosage selon la revendication 11, **caractérisé en ce que** l'outil d'alimentation (12, 212, 412) est fixé et/ou guidé sur la barre (9) et de façon à pouvoir coulisser par translation par rapport à cette barre le long de l'axe longitudinal médian (4).

13. Dispositif de dosage selon la revendication 11 ou 12, **caractérisé en ce que** l'outil d'alimentation (12, 212, 412) présente une partie agitatrice (14) et un élément d'alimentation (15, 215, 315, 415), l'élément d'alimentation (15, 215, 315, 415) étant toujours en contact libre avec le bord de l'ouverture de sortie (7) lorsque le dispositif de dosage fonctionne.

14. Dispositif de dosage selon l'une des revendications 1 à 13, **caractérisé en ce que** le boîtier (3, 203, 303) se rétrécit en direction de l'ouverture de sortie (7).
